# EUROPÄISCHE PATENTSCHRIFT

(11) **EP 2 073 408 B1**
(45) Veröffentlichungstag und Bekanntmachung des Hinweises auf die Patenterteilung: **08.08.2012**
(21) Anmeldenummer: 07024426.4
(22) Anmeldetag: 17.12.2007
(51) Int. Cl.: H04B 10/22

(54) **Vorrichtung zum Übertragen von Lichtsignalen und entsprechendes Verfahren**
Device for transmitting light signals and corresponding method
Dispositif de transmission de signaux lumineux et procédé correspondant

(43) Veröffentlichungstag der Anmeldung: 24.06.2009
(73) Patentinhaber: SIEMENS AKTIENGESELLSCHAFT, 80333 München (DE)
(72) Erfinder: Hemmeter, Georg, 91056 Erlangen (DE); Schwesig, Günter, 91054 Erlangen (DE)

(56) Entgegenhaltungen:
- EP-A- 0 432 922
- EP-A- 1 187 152
- DE-B3- 10 302 435
- US-A- 4 310 767

## Beschreibung

Die vorliegende Erfindung betrifft eine Vorrichtung zum Übertragen von Lichtsignalen zwischen zwei relativ zueinander bewegbaren Elementen einer Maschine, insbesondere einer Werkzeugmaschine, bei welcher ein erstes der Elemente eine Gruppe von Lichtquellen zum Abgeben von solchen Lichtsignalen und ein zweites der Elemente mindestens einen Lichtempfänger zum Empfangen der Lichtsignale aufweist. Überdies betrifft die Erfindung ein entsprechendes Verfahren.

Vorliegend gilt das Interesse einer Übertragung von Informationen, insbesondere von Feldbussignalen, zwischen Maschinenelementen, welche sich relativ zueinander bewegen. Unter der relativen Bewegung wird hierbei insbesondere eine rotatorische Bewegung verstanden. Unter den Begriff fallen aber auch andere Bewegungsarten, wie beispielsweise eine lineare Bewegung.

Bei bekannten Werkzeug- und Produktionsmaschinen, wie beispielsweise Mehrspindeldrehautomaten bzw. Rundtaktmaschinen, sind Elektromotoren, insbesondere Drehfeldmaschinen, auf einem rotatorisch bewegbaren Maschinenteil angeordnet. Dabei sind jegliche Antriebsregelungen sowie eine Leistungselektronik, wie netzgeführte Gleichrichter, selbstgeführte Gleichrichter oder ungeregelte Gleichrichter und Wechselrichter, zum Betreiben der Motoren üblicherweise in einem Schaltschrank angeordnet. Die Leistungsleitungen werden dabei in der Regel aus dem Schaltschrank heraus hin zu den Motoren geführt.

An diesen Werkzeug- und Produktionsmaschinen, bei welchen die Leistungsleitungen zum Verbinden der Leistungselektronik mit dem rotatorisch bewegbaren Maschinenteil verwendet werden, ist als nachteilig der Umstand anzusehen, dass kein "Endlosdrehen" des bewegten Maschinenteils zur Verringerung der Werkstück-Bearbeitungszeiten ausgeführt werden kann. Darüber hinaus verschleißen die Leistungsleitungen durch die permanente Biege- und Torsionsbeanspruchung verhältnismäßig schnell. Überdies ist ein Auswechseln der Leistungsleitungen im Falle eines Defekts aufgrund einer komplexen Maschinenkonstruktion sehr aufwändig.

Demzufolge werden heutzutage immer häufiger Werkzeug- und Produktionsmaschinen mit der Funktion "Endlosdrehen" eingesetzt. So sind derartige Maschinen aus dem Stand der Technik bereits als bekannt zu entnehmen. Dabei erfolgt die Energieübertragung üblicherweise über Schleifringe bzw. induktiv, wobei die induktive Energieübertragung einen erheblichen Mehraufwand an Leistungselektronik bedeutet.

Zu der vorliegend betrachteten Kommunikation zwischen feststehenden Komponenten, wie beispielsweise einer Steuerung, mit den rotierbaren Komponenten, wie beispielsweise eine Antriebsregelung, werden serielle Bussysteme verwendet. Die Übertragung von Daten kann dabei ebenfalls wie bei der Energieübertragung über Schleifringe erfolgen. Vorliegend geht es aber um eine Übertragung von Informationen mittels Lichtsignalen. Bei den aus dem Stand der Technik bekannten Vorrichtungen zum Übertragen von Lichtsignalen zwischen zwei relativ zueinander bewegbaren Elementen einer Maschine werden Glas- bzw. Kunststoffkörper mit moduliertem Licht gespeist, wobei die Lichtwellensignale das Protokoll der seriellen Kommunikationsstrecke darstellen.

Bei den aus dem Stand der Technik bekannten Vorrichtungen zum Übertragen von Lichtsignalen zwischen zwei relativ zueinander rotatorisch bewegbaren Elementen einer Maschine wird der Datenstrom mittels mehrerer Lichtquellen erzeugt und anschließend in die Glas- oder Kunststoffkörper eingespeist bzw. direkt abgestrahlt. Ein Nachteil an dieser Ausführung besteht darin, dass sich aufgrund der Mehrzahl von Lichtquellen der Strombedarf erheblich erhöht. So ist bei diesem bekannten Übertragungssystem ein separater Anschluss für eine Spannungs- bzw. Stromversorgung erforderlich, weil die in den Standard-Busleitungen oder die bei speziellen Bussystemen eingeführten Stromversorgungen nicht ausreichen. Andererseits ist die für die Datenübertragung notwendige Anzahl der einsetzbaren Lichtquellen durch den zur Verfügung stehenden Strombetrag begrenzt.

Die Druckschrift EP 0 432 922 A2 beschreibt eine Vorrichtung zum Übertragen von Lichtsignalen zwischen zwei gegeneinander drehbaren Bauelementen eines Videorekorders. An einem ersten Bauteil ist eine Gruppe von Lichtempfängern angebracht, während an einem zweiten Bauteil eine Vielzahl von Lichtquellen angebracht sind. Das erste Bauteil kann relativ zum zweiten Bauteil um eine Drehachse gedreht werden. Ein Tachometer erfasst die jeweils augenblickliche Drehzahl, und anhand von Impulsen des Tachometers ist teilweise die jeweils augenblickliche relative Wickelstellung des ersten Bauteils bezüglich des zweiten Bauteils ermittelbar. Es werden zu einem bestimmten Zeitpunkt nur diejenigen Lichtquellen eingeschaltet, welche gegenüber einem der Lichtempfänger liegen. Der Wechsel zwischen den eingeschalteten Lichtquellen erfolgt synchron mit der erfassten Drehzahl.

Aus der Druckschrift DE 103 02 435 B3 ist ebenfalls eine Vorrichtung zum Übertragen modulierter optischer Signale zwischen zwei gegeneinander drehbar gelagerten Bauteilen bekannt. In Abhängigkeit von der jeweils augenblicklichen Position der Bauteile zueinander wird zwischen den Sendern bzw. Empfängern derart umgeschaltet, dass der optische Pfad immer gleichsinnig mit der Bewegungsrichtung verläuft.

Die Aufgabe der vorliegenden Erfindung besteht darin, eine Vorrichtung sowie ein Verfahren vorzuschlagen, bei welchen Maßnahmen getroffen sind, die ein energieeffizientes Übertragen von Lichtsignalen zwischen zwei relativ zueinander bewegbaren Elementen einer Maschine gewährleisten.

Diese Aufgabe wird erfindungsgemäß durch eine Vorrichtung mit den Merkmalen gemäß Patentanspruch 1, sowie durch ein Verfahren mit den Merkmalen gemäß Patentanspruch 12 gelöst. Vorteilhafte Ausgestaltungen mit zweckmäßigen Weiterbildungen der Erfindung sind in den abhängigen Patentansprüchen angegeben.

Eine erfindungsgemäße Vorrichtung ist zum Übertragen von Lichtsignalen zwischen zwei relativ zueinander bewegbaren Elementen einer Maschine, insbesondere einer Werkzeugmaschine, ausgebildet. Dabei weist ein erstes der Elemente eine Gruppe von Lichtquellen zum Abgeben von solchen Lichtsignalen und ein zweites der Elemente mindestens einen Lichtempfänger zum Empfangen der Lichtsignale auf. Ein Grundgedanke besteht dabei darin, dass eine das Abgeben der Lichtsignale bewirkende Einheit dazu ausgelegt ist, ein Ein- oder Ausschalten von lediglich einem Teil der Lichtquellen zu bewirken.

Ein wesentlicher Gedanke der vorliegenden Erfindung besteht mit anderen Worten darin, die Vorrichtung derart auszugestalten, dass sie eine Einheit aufweist, mittels welcher die Lichtquellen gruppenweise gezielt aktivierbar bzw. deaktivierbar sind. In vorteilhafter Weise wird durch die erfindungsgemäße Vorrichtung eine Reduktion der Stromaufnahme und somit ein energieeffizientes Übertragen von Lichtsignalen zwischen den Elementen erzielt.

**Die** Einheit **ist** dazu ausgelegt, die Auswahl des ein-/ausgeschalteten Teils der Lichtquellen aufgrund eines empfangenen Signals vorzunehmen, wobei das Signal eine durch die relative Bewegung eingenommene Stellung des ersten Elements bezüglich des zweiten Elements wiedergibt. Durch das gezielte Aktivieren bzw. Deaktivieren von lediglich einem Teil der Lichtquellen in Abhängigkeit der Stellung der beiden Elemente relativ zueinander wird neben der Reduzierung des Stromverbrauchs auch ein zuverlässiges Übertragen von Daten mittels Lichtsignalen erzielt. Hierzu können insbesondere nur diejenigen Lichtquellen aktiviert werden, welche zu einem bestimmten Zeitpunkt dem Lichtempfänger zugewandt sind. Überdies bietet sich an, die Intensität des Lichtstroms des aktuell aktivierten Teils der Lichtquellen derart zu erhöhen, dass eine entsprechend niedrigere Empfindlichkeit des an dem zweiten der beiden Elemente angeordneten Lichtempfängers erforderlich ist. Hierdurch kann der Störabstand der Lichtsignale, also das Verhältnis des Nutzsignals zu einem elektrischen bzw. optischen Rauschen, wesentlich erhöht werden. Darüber hinaus werden somit die Empfindlichkeit der Vorrichtung gegen in der Maschine auftretende elektromagnetische Felder und die EMV-Störungen reduziert.

**Es ist** eine Einrichtung zum Ermitteln einer relativen Stellung des ersten Elements bezüglich des zweiten Elements vorgesehen, mittels welcher das Signal erzeugbar ist. Durch diese Einrichtung, welche in der Lage ist, die aktuelle Stellung der beiden Elemente relativ zueinander zu ermitteln und ein diese Stellung wiedergebendes Signal zu erzeugen, wird die Zuverlässigkeit der Datenübertragung weiterhin erhöht.

**Die** Einrichtung zum Ermitteln der relativen Stellung **weist** eine an dem zweiten Element angeordnete weitere einzelne Lichtquelle sowie eine an dem ersten Element ange-ordnete Gruppe von Lichtempfängern auf. Insbesondere ist die Anzahl der Lichtempfänger der Einrichtung zum Ermitteln der relativen Stellung im Wesentlichen gleich der Anzahl der Lichtquellen zum Abgeben der Lichtsignale. Hierdurch kann eine für die Ermittlung der relativen Stellung geeignete Auflösung der Einrichtung erzielt werden. Insbesondere kann die weitere einzelne Lichtquelle an einer dem ersten Element zugewandten Stirnseite des zweiten Elements angeordnet sein, wobei die Lichtempfänger bevorzugt an einer dem zweiten Element zugewandten Stirnseite des ersten Elements angeordnet sein können. Überdies bietet sich an, die Lichtempfänger gleichmäßig voneinander beabstandet anzuordnen.

In einer Ausführungsform ist die relative Bewegung eine rotatorische Bewegung und die relative Stellung eine Winkelstellung, wobei das erste Element vorzugsweise eine feststehende Leiterplatte und das zweite Element eine rotatorisch bewegbar gelagerte Leiterplatte ist. Insbesondere kann die rotatorisch bewegbar gelagerte Leiterplatte ein Teil einer Hohlwelle der Maschine sein. Bei einer rotatorischen Bewegung der beiden Elemente relativ zueinander kann beispielsweise vorgesehen sein, dass die das Ein- oder Ausschalten bewirkende Einheit dazu ausgelegt ist, den Teil der Lichtquellen nach einem vorbestimmten und von der Drehzahl abhängigen Zeitmuster zu aktivieren bzw. zu deaktivieren. Hierdurch wird gewährleistet, dass keine Einrichtung zum Ermitteln der relativen Stellung erforderlich ist. Somit kann eine kostenreduzierte sowie bauteilreduzierte Vorrichtung geschaffen werden. Wird demgegenüber die Auswahl des ein-/ausgeschalteten Teils der Lichtquellen aufgrund der relativen Winkelstellung der beiden Elemente vorgenommen, so bietet sich an, die Einrichtung zum Ermitteln der relativen Winkelstellung nach einem "Single-turn-Prinzip" auszulegen, so dass bereits nach einem Einschalten der Maschine sofort der dem Lichtempfänger zugewandte Teil der Lichtquellen erkannt und aktiviert wird. Umfasst die Einrichtung zum Ermitteln der relativen Winkelstellung eine Lichtquelle sowie eine Gruppe von Lichtempfängern, so zeigt sich als besonders vorteilhaft, dass die Lichtempfänger der Einrichtung an einem der Elemente gleichmäßig voneinander beabstandet sowie gleich weit von einem Mittelpunkt des Elements entfernt angeordnet sind. So muss die Einrichtung zum Ermitteln der relativen Stellung insbesondere nur eine geringe Winkelauflösung aufweisen bzw. lediglich diejenigen Winkelsektoren erkennen, in welchen sich die dem Lichtempfänger zugewandten Lichtquellen zum Übertragen von Lichtsignalen befinden.

Bei einer alternativen Ausführungsform ist die relative Bewegung eine lineare Bewegung. Es bietet sich an, bei dieser Ausführungsform die Lichtquellen zum Abgeben von Lichtsignalen in Reihe entlang einer Geraden anzuordnen.

In einer bevorzugten Ausführungsform, bei der die beiden Elemente rotatorisch zueinander bewegt werden, sind die Lichtsignale in axialer Richtung übertragbar. Insbesondere können die beiden relativ zueinander rotatorisch bewegbaren Elemente axial zueinander angeordnet sein.

In einer alternativen Ausführungsform können die Lichtsignale in radialer Richtung übertragbar sein. Dabei zeigt sich als vorteilhaft, wenn die beiden Elemente konzentrisch angeordnet sind. Hierdurch wird gewährleistet, dass die axiale Baulänge der beiden Elemente erheblich minimiert werden kann, wodurch eine im Hinblick auf die Fertigung kostenreduzierte sowie eine platzsparende Vorrichtung geschaffen wird.

Vorzugsweise sind die Lichtquellen an einer dem zweiten Element zugewandten Stirnseite des ersten Elements angeordnet. Insbesondere bei der axialen Übertragung von Informationen sowie bei der rotatorischen Bewegung der Elemente relativ zueinander wird hierdurch eine zuverlässige Datenübertragung erzielt. Die Lichtquellen sind bevorzugt an dem ersten Element gleichmäßig voneinander beabstandet und vorzugsweise gleich weit von einem Mittelpunkt des ersten Elements entfernt angeordnet. Die Lichtquellen zum Abgeben der Lichtsignale sind an dem ersten Element, mit anderen Worten, insbesondere entlang einer Kontur eines Kreises angeordnet.

In einer Ausführungsform weist das zweite Element eine weitere Gruppe von Lichtquellen zum Abstrahlen von Lichtsignalen und das erste Element mindestens einen weiteren Lichtempfänger zum Empfangen der Lichtsignale auf. Durch ein einfaches Verdoppeln der Komponenten kann somit in vorteilhafter Weise eine bidirektionale Datenübertragungsvorrichtung geschaffen werden.

Vorzugsweise ist die Lichtquelle eine Leuchtdiode oder eine Laserdiode, wobei der Lichtempfänger vorzugsweise eine Photodiode ist. Dabei zeichnen sich die Laserdioden durch besondere Zuverlässigkeit aus, wohingegen durch Einsatz der Leuchtdioden bzw. der Fotodioden eine kostenreduzierte Vorrichtung geschaffen wird.

Ein erfindungsgemäßes Verfahren dient zum Übertragen von Lichtsignalen zwischen zwei Elementen einer Maschine, insbesondere einer Werkzeugmaschine. Bei dem Verfahren werden die Elemente relativ zueinander bewegt, wobei ein erstes der Elemente eine Mehrzahl von Lichtquellen aufweist, mittels welchen solche Lichtsignale abgegeben werden, und ein zweites der Elemente mindestens einen Lichtempfänger aufweist, welcher die Lichtsignale empfängt. Dabei gibt erfindungsgemäß nur ein Teil der Lichtquellen gleichzeitig Lichtsignale ab.

Bei dem Verfahren wird der Teil der Lichtquellen bevorzugt in Abhängigkeit einer relativen Stellung des ersten Elements bezüglich des zweiten Elements ausgewählt, wobei die relative Stellung vorzugsweise gemessen wird.

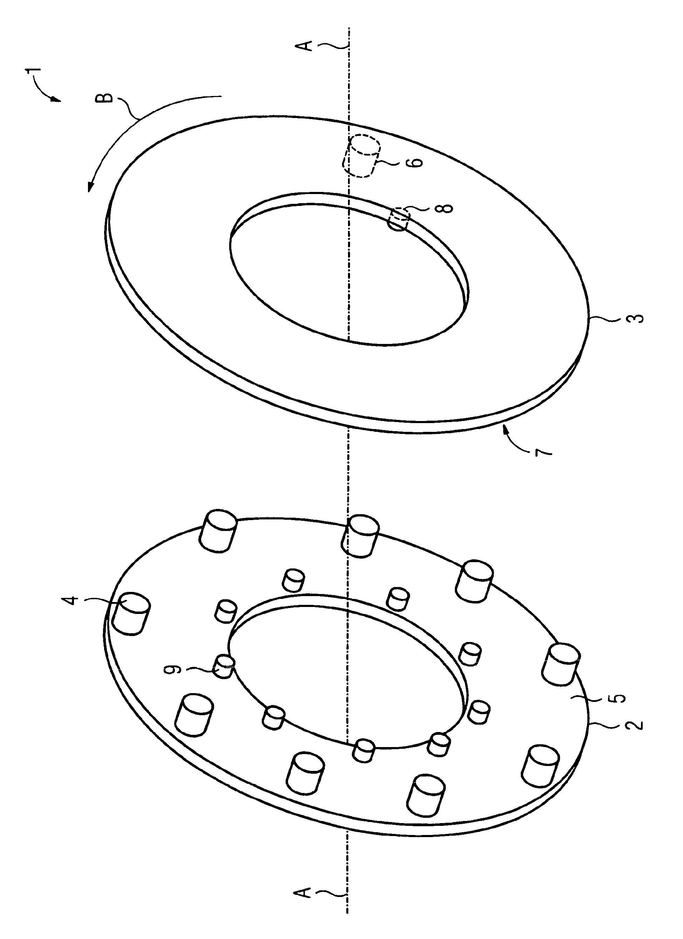

Weitere Vorteile, Merkmale und Einzelheiten der Erfindung ergeben sich aus der nachfolgenden Beschreibung eines bevorzugten Ausführungsbeispiels sowie anhand der Zeichnung.

Die einzige FIG zeigt eine Vorrichtung zum Übertragen von Lichtsignalen zwischen zwei Elementen einer Maschine gemäß einer Ausführungsform der Erfindung.

Eine in der FIG wiedergegebene Vorrichtung 1 umfasst zwei relativ zueinander rotatorisch bewegbare Elemente 2, 3 einer Werkzeugmaschine, zwischen denen Lichtsignale übertragen werden. Vorliegend ist das erste Element 2 als feststehende Leiterplatte ausgebildet und mit einem Schaltschrank der Werkzeugmaschine gekoppelt. Demgegenüber ist das zweite Element 3 eine rotatorisch bewegbar gelagerte Leiterplatte, welche im vorliegenden Beispiel einen Teil einer Hohlwelle der Werkzeugmaschine darstellt. Die beiden Leiterplatten 2, 3 sind ringförmig ausgebildet und axial zueinander derart angeordnet, dass die rotatorisch bewegbar gelagerte Leiterplatte 3 um eine Drehachse A in einer in der FIG anhand von einem Pfeil B dargestellten Richtung drehbar ist.

Um eine drahtlose Kommunikation zwischen den beiden Leiterplatten 2, 3 zu gewährleisten, weist die feststehende Leiterplatte 2 eine Gruppe von Lichtquellen 4 auf. Die Lichtquellen 4 sind an einer der rotatorisch bewegbar gelagerten Leiterplatte 3 zugewandten Stirnseite 5 der feststehenden Leiterplatte 2 angeordnet. An dieser Stelle sei angemerkt, dass die Lichtquellen 4 an der feststehenden Leiterplatte 2 gleichmäßig voneinander beabstandet sowie gleich weit von einem Mittelpunkt der feststehenden Leiterplatte 2 derart angeordnet sind, dass sie einen Rand der feststehenden Leiterplatte 2 definierenden Ring bilden. Entsprechend umfasst die rotatorisch bewegbar gelagerte Leiterplatte 3 einen Lichtempfänger 6, welcher vorliegend an einer der feststehenden Leiterplatte 2 zugewandten Stirnseite 7 der rotatorisch bewegbar gelagerten Leiterplatte 3 angeordnet ist. Der Lichtempfänger 6 ist zugunsten einer zuverlässigen Datenübertragung gleich weit von der Drehachse A wie die Lichtquellen 4 entfernt.

Vorliegend richtet sich das Interesse auf eine Übertragung von Lichtsignalen zwischen den Lichtquellen 4 und dem einzelnen Lichtempfänger 6, wobei das Ziel ist, ein energieeffizientes Übertragen von solchen Lichtsignalen zu gewährleisten. Hierzu umfasst die Vorrichtung 1 eine in der FIG nicht dargestellte Einheit, welche dazu ausgelegt ist, lediglich einen dem Lichtempfänger 6 aktuell zugewandten Teil der Lichtquellen 4 zu aktivieren. Im vorliegenden Beispiel ist diese Einheit dazu ausgelegt, die Auswahl des ein- bzw. ausgeschalteten Teils der Lichtquellen aufgrund eines Signals vorzunehmen, wobei das Signal eine durch die relative rotatorische Bewegung eingenommene Winkelstellung der rotatorisch bewegbar gelagerten Leiterplatte 3 bezüglich der feststehenden Leiterplatte 2 wiedergibt. Die Vorrichtung 1 weist überdies eine Einrichtung zum Ermitteln der relativen Winkelstellung der rotatorisch bewegbar gelagerten Leiterplatte 3 bezüglich der feststehenden Leiterplatte 2 auf, mittels welcher das Signal erzeugbar ist.

Vorliegend umfasst die Einrichtung zum Ermitteln der relativen Winkelstellung eine an der Stirnseite 7 der rotatorisch bewegbar gelagerten Leiterplatte 3 angeordnete Lichtquelle 8. Entsprechend weist die Einrichtung eine an der Stirnseite 5 der feststehenden Leiterplatte 2 angeordnete Gruppe von Lichtempfängern 9 auf. Die Lichtempfänger 9 sowie die einzelne Lichtquelle 8 sind gleich weit von der Drehachse A angeordnet, wobei die Lichtempfänger 9 an der Stirnseite 5 der feststehenden Leiterplatte 2 überdies gleichmäßig voneinander beabstandet angeordnet sind. Hier ist die Anzahl der Lichtempfänger 9 gleich der Anzahl der Lichtquellen 4.

Nachstehend wird die Funktionsweise der Vorrichtung 1 näher erläutert. Befindet sich die Werkzeugmaschine im Betriebszustand, so dreht sich die rotatorisch bewegbar gelagerte Leiterplatte 3 bezüglich der feststehenden Leiterplatte 2 um die Drehachse A. Zwischen den Lichtquellen 4 und dem Lichtempfänger 6 findet nun eine drahtlose Kommunikation mittels Lichtsignalen statt. Dabei werden mittels der Einheit nur die benötigten Lichtquellen 4, vorliegend nur zwei Lichtquellen 4, zu einem bestimmten Zeitpunkt aktiv geschaltet. So werden die Lichtquellen 4 abhängig vom Verdrehwinkel bzw. von der Winkelstellung ein- bzw. ausgeschaltet. Welche der Lichtquellen 4 dem Lichtempfänger 6 aktuell zugewandt ist, wird mittels der Einrichtung zum Ermitteln der relativen Winkelstellung, also mittels der Lichtquelle 8 und der Lichtempfänger 9, festgestellt. Dabei arbeitet die Einrichtung zum Ermitteln der relativen Stellung nach einem "Single-turn-Prinzip", derart, dass sie bereits nach dem Einschalten der Werkzeugmaschine sofort die dem Lichtempfänger 6 zugewandten Lichtquellen 4 bzw. einen richtigen Sektor erkennt.

Es kann vorgesehen sein, dass die Vorrichtung 1 als eine bidirektionale Datenübertragungsvorrichtung aufgebaut ist. Hierzu müsste lediglich eine weitere Gruppe von Lichtquellen sowie ein weiterer Lichtempfänger eingesetzt werden, und zwar die Lichtquellen auf dem Element 3 und der Lichtempfänger auf dem Element 2.

## Patentansprüche

1. Vorrichtung (1) zum Übertragen von Lichtsignalen zwischen zwei relativ zueinander bewegbaren Elementen (2,3)einer Maschine, insbesondere einer Werkzeugmaschine, bei welcher ein erstes der Elemente eine Gruppe von Lichtquellen (4) zum Abgeben von solchen Lichtsignalen und ein zweites der Elemente mindestens einen Lichtempfänger (6) zum Empfangen der Lichtsignale aufweist, wobei die Vorrichtung (1) eine Einrichtung (8, 9) zum Ermitteln einer relativen Stellung des ersten Elements (2) bezüglich des zweiten Elements (3) aufweist, mittels welcher ein Signal erzeugbar ist, welches die relative Stellung wiedergibt, und wobei eine das Abgeben der Lichtsignale bewirkende Einheit dazu ausgelegt ist, ein Ein- oder Ausschalten von lediglich einem Teil der Lichtquellen (4) zu bewirken und die Auswahl des ein/ausgeschalteten Teils der Lichtquellen (4) aufgrund des Signals der Einrichtung (8, 9) zum Ermitteln der relativen Stellung vorzunehmen, **dadurch gekennzeichnet, dass** die Einrichtung (8, 9) zum Ermitteln der relativen Stellung eine an dem zweiten Element (3) angeordnete weitere einzelne Lichtquelle (8) sowie eine an dem ersten Element (2) angeordnete Gruppe von Lichtempfängern (9) aufweist.

2. Vorrichtung (1) nach Anspruch 1, **dadurch gekennzeichnet, dass** die relative Bewegung eine rotatorische Bewegung und eine relative Stellung der Elemente zueinander eine Winkelstellung ist.

3. Vorrichtung (1) nach Anspruch 1 oder 2, **dadurch gekennzeichnet, dass** das erste Element (2) eine feststehende Leiterplatte und das zweite Element (3) eine rotatorisch bewegbar gelagerte Leiterplatte ist.

4. Vorrichtung (1) nach Anspruch 2 oder 3, **dadurch gekennzeichnet, dass** die Lichtsignale in axialer Richtung übertragbar sind.

5. Vorrichtung (1) nach Anspruch 2 oder 3, **dadurch gekennzeichnet, dass** die Lichtsignale in radialer Richtung übertragbar sind.

6. Vorrichtung (1) nach einem der vorhergehenden Ansprüche, **dadurch gekennzeichnet, dass** die Lichtquellen (4) an einer dem zweiten Element (3) zugewandten Stirnseite (5) des ersten Element (2) angeordnet sind.

7. Vorrichtung (1) nach einem der vorhergehenden Ansprüche, **dadurch gekennzeichnet, dass** die Lichtquellen (4) an dem ersten Element (2) gleichmäßig voneinander beabstandet angeordnet sind.

8. Vorrichtung (1) nach einem der vorhergehenden Ansprüche, **dadurch gekennzeichnet, dass** die Lichtquellen (4) an dem ersten Element (2) gleichweit von einem Mittelpunkt (A) entfernt angeordnet sind.

9. Vorrichtung (1) nach einem der vorhergehenden Ansprüche, **dadurch gekennzeichnet, dass** das zweite Element (3) eine weitere Gruppe von Lichtquellen zum Abstrahlen von Lichtsignalen und das erste Element mindestens einen weiteren Lichtempfänger zum Empfangen der Lichtsignale aufweist, so dass die Vorrichtung (1) als bidirektionale Datenübertragungsvorrichtung ausgebildet ist.

10. Vorrichtung (1) nach einem der vorhergehenden Ansprüche, **dadurch gekennzeichnet, dass** die Lichtquelle (4, 8) eine Leuchtdiode oder eine Laserdiode ist.

11. Vorrichtung (1) nach einem der vorhergehenden Ansprüche, **dadurch gekennzeichnet, dass** der Lichtempfänger (6) eine Photodiode ist.

12. Verfahren zum Übertragen von Lichtsignalen zwischen zwei Elementen (2, 3) einer Maschine, insbesondere einer Werkzeugmaschine, bei welcher die Elemente (2, 3) relativ zueinander bewegt werden, wobei ein erstes der Elemente (2) eine Mehrzahl von Lichtquellen (4) aufweist, mittels welchen solche Lichtsignale abgegeben werden, und ein zweites der Elemente (3) mindestens einen Lichtempfänger (6) aufweist, welcher die Lichtsignale empfängt, wobei eine Einrichtung (8, 9) eine relative Stellung des ersten Elements (2) bezüglich des zweiten Elements (3) ermittelt und ein Signal erzeugt, welches die relative Stellung wiedergibt, und wobei nur ein Teil der Lichtquellen (4) gleichzeitig Lichtsignale abgibt und die Auswahl des ein/ausgeschalteten Teils der Lichtquellen (4) aufgrund des Signals der Einrichtung (8, 9) zum Ermitteln der relativen Stellung vorgenommen wird, **dadurch gekennzeichnet, dass** die relative Stellung mithilfe einer an dem zweiten Element (3) angeordneten weiteren einzelnen Lichtquelle (8) sowie einer an dem ersten Element (2) angeordneten Gruppe von Lichtempfängern (9) ermittelt wird.

## Claims

1. Device (1) for transferring light signals between two elements (2, 3) of a machine, in particular of a machine tool, which are movable relative to one another, in which a first of the elements has a group of light sources (4) for delivering such light signals and a second of the elements has at least one photoreceiver (6) for receiving the light signals, the device having a facility (8, 9) for determining a relative position of the first element (2) with respect to the second element (3), by means of which a signal can be generated that reproduces the relative position, and a unit causing the delivery of the light signals being designed such that a turning on or off of only one portion of the light sources (4) is effected and the selection of the portion of the light sources (4) turned on or off being performed on the basis of the signal from the facility (8, 9) for determining the relative position, **characterised in that** the facility (8, 9) for determining the relative position has a further single light source (8) arranged on the second element (3) and also a group of photoreceivers (9) arranged on the first element (2).

2. Device (1) according to claim 1, **characterised in that** the relative movement is a rotary movement and a relative position of the elements to one another is an angular position.

3. Device (1) according to claim 1 or 2, **characterised in that** the first element (2) is a fixed printed circuit board and the second element (3) is a printed circuit board mounted to be capable of rotary movement.

4. Device (1) according to claim 2 or 3, **characterised in that** the light signals can be transferred in the axial direction.

5. Device (1) according to claim 2 or 3, **characterised in that** the light signals can be transferred in the radial direction.

6. Device (1) according to one of the preceding claims, **characterised in that** the light sources (4) are arranged on a front face (5) of the first element (2) facing the second element (3).

7. Device (1) according to one of the preceding claims, **characterised in that** the light sources (4) are arranged on the first element (2) at an equal distance from one another.

8. Device (1) according to one of the preceding claims, **characterised in that** the light sources (4) are arranged on the first element (2) at an equal distance from a central point (A).

9. Device (1) according to one of the preceding claims, **characterised in that** the second element (3) has a further group of light sources for emitting light signals and the first element has at least one further photoreceiver for receiving the light signals, such that the device (1) is designed as a bidirectional data transfer device.

10. Device (1) according to one of the preceding claims, **characterised in that** the light source (4, 8) is a light emitting diode or a laser diode.

11. Device (1) according to one of the preceding claims, **characterised in that** the photoreceiver (6) is a photodiode.

12. Method for transferring light signals between two elements (2, 3) of a machine, in particular of a machine tool, wherein the elements (2, 3) are moved relative to one another, in which a first of the elements has a plurality of light sources (4), by means of which such light signals are emitted, and a second of the elements (3) has at least one photoreceiver (6), which receives the light signals, a facility (8, 9) determining a relative position of the first element with respect to the second element (3) and generating a signal which reproduces the relative position, and only one portion of the light sources (4) emitting light signals simultaneously and the selection of the portion of the light sources (4) turned on or off being performed on the basis of the signal from the facility (8, 9) for determining the relative position, **characterised in that** the relative position is determined with the aid of a further single light source (8) arranged on the second element (3) and also a group of photoreceivers (9) arranged on the first element (2).

## Revendications

1. Dispositif ( 1 ) de transmission de signaux lumineux entre deux éléments ( 2, 3 ) mobiles relativement entre eux d'une machine, notamment d'une machine-outil, dans lequel un premier des éléments comporte un groupe de sources ( 4 ) lumineuses pour l'émission de signaux lumineux de ce genre et un deuxième des éléments comporte au moins un récepteur ( 6 ) de lumière pour la réception des signaux lumineux, le dispositif ( 1 ) comportant un agencement ( 8, 9 ) de détermination de la position relative du premier élément ( 2 ) par rapport au deuxième élément ( 3 ), au moyen duquel peut être produit un signal qui reproduit la position relative et dans lequel une unité provoquant l'émission des signaux lumineux est conçue pour provoquer une mise en circuit ou une mise hors circuit de seulement une partie des sources ( 4 ) lumineuses et pour effectuer le choix de la partie mise en circuit/mise hors circuit des sources ( 4 ) lumineuses sur la base du signal de l'agencement ( 8, 9 ) de détermination de la position relative, **caractérisé en ce que** l'agencement ( 8, 9 ) de détermination de la position relative comporte une autre source ( 8 ) lumineuse individuelle montée sur le deuxième élément ( 3 ), ainsi qu'un groupe de récepteurs ( 9 ) de lumière montés sur le premier élément ( 2 ).

2. Dispositif ( 1 ) suivant la revendication 1, **caractérisé en ce que** le mouvement relatif est un mouvement de rotation et une position relative des éléments entre eux.

3. Dispositif ( 1 ) suivant la revendication 1 ou 2, **caractérisé en ce que** le premier élément ( 2 ) est une plaquette à circuit imprimé fixe et le deuxième élément ( 3 ) est une plaquette à circuit imprimé, montée mobile en rotation.

4. Dispositif ( 1 ) suivant la revendication 2 ou 3, **caractérisé en ce que** les signaux lumineux peuvent être transmis dans une direction axiale.

5. Dispositif ( 1 ) suivant la revendication 2 ou 3, **caractérisé en ce que** les signaux lumineux peuvent être transmis dans une direction radiale.

6. Dispositif ( 1 ) suivant l'une des revendications précédentes, **caractérisé en ce que** les sources ( 4 ) lumineuses sont montées sur un côté ( 5 ) frontal, tourné vers le deuxième élément ( 3 ), du premier élément ( 2 ).

7. Dispositif ( 1 ) suivant l'une des revendications précédentes, **caractérisé en ce que** les sources ( 4 ) lumineuses sont réparties de manière équidistante entre elles sur le premier élément ( 2 ).

8. Dispositif ( 1 ) suivant l'une des revendications précédentes, **caractérisé en ce que** les sources ( 4 ) lumineuses sont montées sur le premier élément ( 2 ) en étant éloignées d'une même distance d'un centre ( A ).

9. Dispositif ( 1 ) suivant l'une des revendications précédentes, **caractérisé en ce que** le deuxième élément ( 3 ) comporte un autre groupe de sources lumineuses pour l'émission de signaux lumineux et le premier élément comporte au moins un autre récepteur de lumière pour la réception des signaux lumineux, de sorte que le dispositif ( 1 ) est constitué sous la forme d'un dispositif bidirectionnel de transmission de données.

10. Dispositif ( 1 ) suivant l'une des revendications précédentes, **caractérisé en ce que** la source ( 4, 8 ) lumineuse est une diode électroluminescente ou une diode laser.

11. Dispositif ( 1 ) suivant l'une des revendications précédentes, **caractérisé en ce que** le récepteur ( 6 ) de lumière est une photodiode.

12. Procédé de transmission de signaux lumineux entre deux éléments ( 2, 3 ) d'une machine, notamment d'une machine-outil, dans lequel les éléments ( 2, 3 ) sont déplacés relativement entre eux, dans lequel un premier des éléments ( 2, 3 ) a une pluralité de sources ( 4 ) lumineuses, au moyen desquelles des signaux lumineux de ce genre sont émis et un deuxième des éléments ( 3 ) a au moins un récepteur ( 6 ) de lumière qui reçoit les signaux lumineux, dans lequel un agencement ( 8, 9 ) détermine une position relative du premier élément ( 2 ) par rapport au deuxième élément ( 3 ) et produit un signal qui reproduit la position relative et dans lequel seulement une partie des sources ( 4 ) lumineuses émet des signaux lumineux en même temps et le choix de la partie mise en circuit/mise hors circuit des sources ( 4 ) lumineuses est effectué sur la base du signal de l'agencement ( 8, 9 ) de détermination de la position relative, **caractérisé en ce qu'**on détermine la position relative à l'aide d'une autre source ( 8 ) lumineuse individuelle montée sur le deuxième élément, ( 3 ) ainsi que d'un groupe, monté sur le premier élément ( 2 ), de récepteurs ( 9 ) de lumière.
